# FASCICULE DE BREVET EUROPEEN

(11) **EP 4 508 319 B1**
(45) Date de publication et mention de la délivrance du brevet: **15.04.2026**
(21) Numéro de dépôt: 22735495.8
(22) Date de dépôt: 15.04.2022
(51) Int. Cl.: F02K 3/077, F02C 7/20, B64D 27/02

(54) **SUSPENSION D'UNE TURBOMACHINE D'AÉRONEF À TRIPLE FLUX**
AUFHÄNGUNG EINER DREIFLUTIGEN FLUGZEUGTURBOMASCHINE
SUSPENSION OF A TRIPLE-FLOW TURBINE ENGINE

(43) Date de publication de la demande: 19.02.2025
(73) Titulaire: General Electric Company, Schenectady, NY 12345 (US); SAFRAN AIRCRAFT ENGINES, 75015 Paris (FR); Safran Nacelles, 76700 Gonfreville-l'Orcher (FR)
(72) Inventeur: GLEMAREC, Guillaume, 77550 MOISSY-CRAMAYEL (FR); AUSSEDAT, Nicolas Maurice Hervé, 77550 MOISSY-CRAMAYEL (FR); CARUEL, Pierre Charles, 77550 MOISSY-CRAMAYEL (FR); GAILLOT, Mathieu Marc Christian, 77550 MOISSY-CRAMAYEL (FR); VIGNES, Jean-Baptiste Manuel Nicolas, 77550 MOISSY-CRAMAYEL (FR)
(74) Mandataire: Gevers & Orès
(86) Numéro de dépôt international: PCT/FR2022/050719
(87) Numéro de publication internationale: WO 2023/198962

(56) Documents cités:
- US-A1- 2021 323 690
- US-B1- 6 209 311
- US-B2- 9 091 207

## Description

### Domaine technique de l'invention

La présente invention concerne le domaine de la suspension d'une turbomachine à triple flux en particulier d'aéronef.

### Arrière-plan technique

L'état de l'art comprend notamment les documents WO-A1-2010/092263, FR-A1-2 981 989, FR-A1-2 987 416, FR-A1-3 008 462, FR-A1-3 008 463, FR-A1-3041 054, FR-A1-3 078 998, US-B2-9,091,207, US-A1-2021/323690 et US-B1-6,209,311.

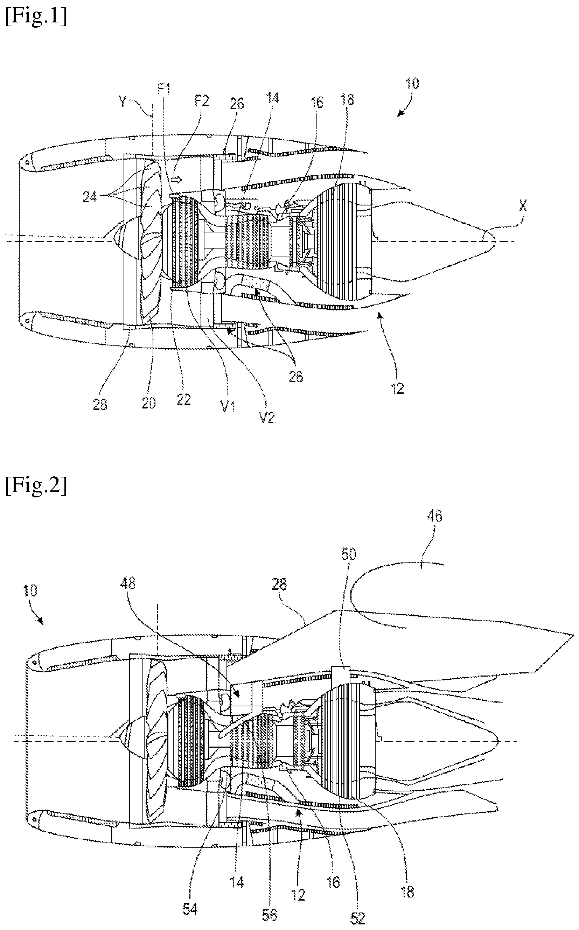

Comme cela est représenté à la figure 1, une turbomachine 10 d'aéronef comprend en général un générateur de gaz 12 comportant au moins un compresseur 14, une chambre annulaire de combustion 16 et au moins une turbine 18.

La turbomachine 10 comprend en outre au moins une hélice de propulsion 20 qui est entraînée par un arbre de la turbine 18.

Le générateur de gaz 12 comporte un bec annulaire 22 de séparation de deux veines annulaires V1, V2 d'écoulement respectif d'un flux primaire interne F1 à l'intérieur du générateur de gaz 12, et d'un flux secondaire externe F2 autour du générateur de gaz 12.

Lorsque l'hélice de propulsion 20 est située en amont du générateur de gaz 12 comme dans l'exemple représenté, elle est appelée soufflante et a pour but d'accélérer l'air aspiré. Une partie du flux d'air sortant de la soufflante s'écoule autour du générateur de gaz 12 pour former le flux secondaire F2 qui permet de générer la majeure partie de la poussée produite par la turbomachine 10. Le reste du flux d'air sortant de la soufflante pénètre dans le générateur de gaz 12 pour former le flux primaire F1. Cet air est comprimé dans le ou chaque compresseur 14, puis mélangé à du carburant puis brûlé dans la chambre de combustion 16. Les gaz de combustion sont ensuite détendus dans la ou chaque turbine 18 afin d'entraîner en rotation le rotor de la turbine et ainsi l'hélice de propulsion 20.

L'hélice 20 comprend des aubes 24 qui ont en général une position angulaire, appelée calage, qui est fixe autour d'un axe Y perpendiculaire à l'axe longitudinal X de la turbomachine 10. Même dans les phases de bas régime du moteur, telles que le ralenti, ce calage est configuré pour que le débit du flux secondaire F2 généré soit suffisant pour alimenter des échangeurs fluide/air 26 surfaciques ou non, installés dans la veine d'écoulement du flux secondaire F2. Ces échangeurs 26 sont nécessaires pour refroidir des équipements de la turbomachine.

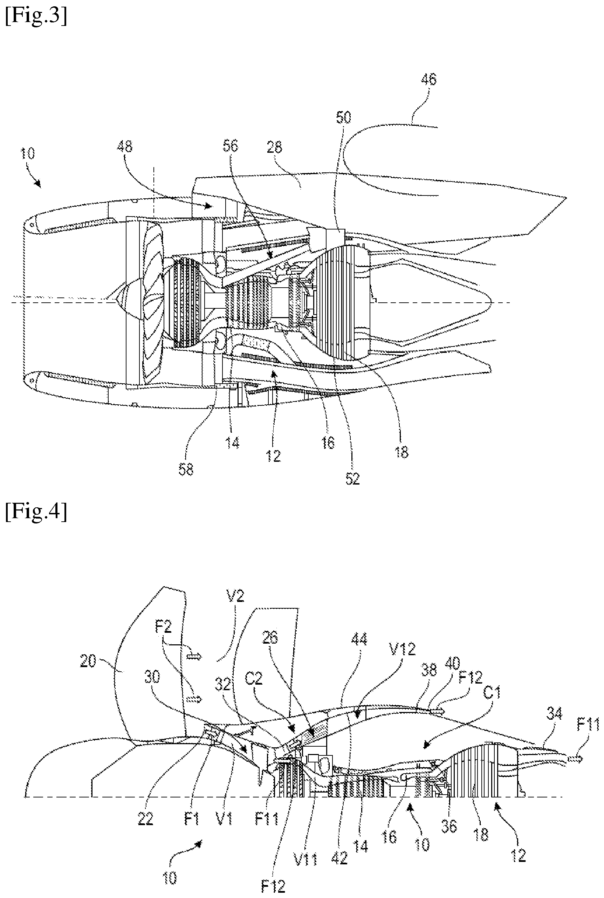

Les figures 2 et 3 montrent deux configurations possibles pour la suspension de la turbomachine 10 de la figure 1. Un pylône 28 est utilisé pour fixer et suspendre la turbomachine 10 à une partie de l'aéronef, telle qu'une voilure 46 par exemple. Le pylône 28 a une forme générale allongée le long de l'axe longitudinal X de la turbomachine 10.

La turbomachine 10 comprend des organes de suspension amont 48 et des organes de suspension aval 50. Dans la configuration de suspension de la figure 2, les organes de suspension aval 50 sont fixés à un carter de turbine 52 de la turbomachine 10, et les organes de suspension amont 48 sont fixés à un carter intermédiaire 54 de la turbomachine 10. Des bielles de reprise de poussée 56 s'étendent depuis les organes de suspension amont 48 jusqu'au générateur de gaz 12.

Dans la configuration de suspension de la figure 3, les organes de suspension aval 50 sont fixés au carter de turbine 52 de la turbomachine 10, et les organes de suspension amont 48 sont fixés à un carter de soufflante 58 de la turbomachine 10. Des bielles de reprise de poussée 56 s'étendent depuis les organes de suspension aval 50 jusqu'au générateur de gaz 12.

Pour améliorer les performances du moteur (poussée plus importante et consommation de carburant plus faible), certaines architectures motrices visent à augmenter le taux de dilution aussi appelé BPR (qui est l'acronyme du terme anglo-saxon *Bypass Ratio*), grâce à une augmentation du diamètre de l'hélice 20. Afin de limiter la masse de la turbomachine 10, le carénage 28 (avec le carter de soufflante 58) situé autour de l'hélice de propulsion 20 peut être supprimé, et les aubes 24 de l'hélice 20 peuvent être rendues orientables, et donc à calage variable, pour piloter le niveau de poussée de la turbomachine.

Cependant, il arrive que dans certaines phases comme le ralenti au sol, le point fixe ou les phases d'inversion de poussée, le débit du flux secondaire F2 ne soit plus suffisamment important pour la gestion thermique de la turbomachine qui a besoin d'échange de chaleur entre fluides et air afin d'assurer le refroidissement de ses équipements et son fonctionnement optimal.

Pour répondre à ce problème, on a déjà proposé de prévoir un flux additionnel de dérivation qui soit dédié à la gestion thermique de la turbomachine.

Comme cela est représenté à la figure 4, la turbomachine 10 comprend alors une hélice secondaire 30 entraînée en rotation par un arbre du générateur de gaz 12. Cette hélice 30 est située dans la veine V1 d'écoulement du flux primaire F1 et en amont d'un deuxième bec annulaire 32 de séparation de deux veines annulaires V11, V12 d'écoulement respectif d'un premier flux interne F11 et d'un deuxième flux externe F12.

Les échangeurs 26 sont logés dans la veine V12 et sont alimentés par le deuxième flux externe F12. Le premier flux interne F11 alimente le compresseur 14, comme évoqué dans ce qui précède.

La figure 4 permet de voir que le générateur de gaz 12 comprend deux compartiments annulaires C1, C2 qui s'étendent autour de l'axe X.

Le premier compartiment annulaire C1 est appelé compartiment chaud car il est relativement proche de la veine V11 et donc plus exposé à la chaleur générée par la compression, par la chambre de combustion 16 et par les gaz de combustion. Ce compartiment chaud C1 s'étend axialement entre le deuxième bec 32 et une première tuyère 34 d'éjection du premier flux interne F11 en sortie de la ou des turbine(s). Ce compartiment chaud C1 est en outre délimité radialement par des première et deuxième parois annulaires 36, 38, respectivement interne et externe, qui s'étendent coaxialement l'une autour de l'autre. La première paroi 36 définit extérieurement la veine d'écoulement V11 du premier flux interne F11, et la deuxième paroi 38 définit intérieurement la veine V12 d'écoulement du deuxième flux externe F12.

Le deuxième compartiment annulaire C2 est appelé compartiment froid car il est moins exposé à la chaleur, en particulier car il est séparé du compartiment chaud par la veine V12. Ce compartiment froid C2 s'étend axialement entre le premier bec 22 et une deuxième tuyère 40 d'éjection du deuxième flux externe F12. Ce compartiment froid C2 est en outre délimité radialement par des troisième et quatrième parois annulaires 42, 44, respectivement interne et externe, qui s'étendent coaxialement l'une autour de l'autre. La troisième paroi 42 définit extérieurement la veine V12 d'écoulement du deuxième flux externe F12, et la quatrième paroi 44 définit intérieurement la veine V2 d'écoulement du flux secondaire F2.

De nombreux équipements de la turbomachine 10 sont installés dans le compartiment chaud C1 qui est volumineux. Le compartiment froid C2 est relativement exigu et réservé aux équipements ne supportant pas les températures du compartiment chaud C1, en particulier les équipements électroniques.

Ce type d'installation a plusieurs conséquences :
- Les équipements dans le compartiment chaud C1 doivent être protégés thermiquement. Ces protections thermiques constituent des volumes et des masses supplémentaires à installer dans un environnement déjà très contraint, ce qui a tendance à nuire à l'accessibilité pour les inspections et la maintenance de la turbomachine.
- Une ventilation localisée doit être ajoutée dans le compartiment chaud C1 pour certains équipements (électroniques) plus sensibles à la chaleur et ne pouvant être installés dans le compartiment froid C2 puisque la place y est trop limitée.

- Les équipements ont une durée de vie réduite dans le compartiment chaud C1 et cet environnement contraignant a des conséquences sur leur conception : le choix de leurs technologies est limité et leur masse est augmentée.

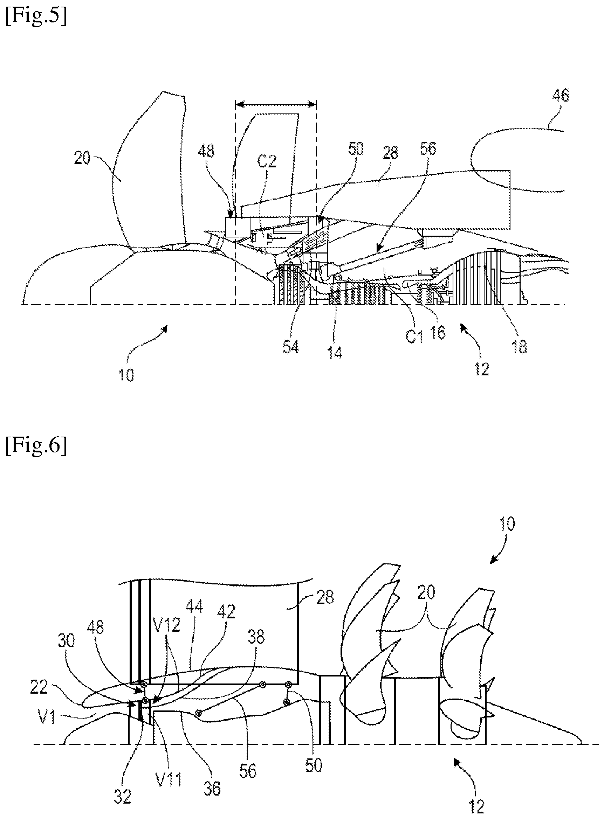

La figure 5 montre une configuration possible pour la suspension de la turbomachine 10 de la figure 4. Les organes de suspension amont 48 et aval 50 sont situés au niveau du compartiment froid C2. Les organes de suspension aval 50 sont reliés au carter intermédiaire 54 et les bielles de reprise de poussée 56 s'étendent depuis le générateur de gaz 12 jusqu'à un point de fixation sur le pylône 28 qui est situé bien en aval des organes de suspension 48, 50.

La figure 6 illustre un autre type de turbomachine 10 à triple flux, dans laquelle l'hélice principale 20 est située en aval du générateur de gaz 12. Cette hélice principale 20 fait partie d'un doublet d'hélice non carénée et contrarotative.

Cette figure 6 montre une configuration possible pour la suspension de la turbomachine 10. Les organes de suspension amont 48 sont situés au niveau du compartiment froid C2, et les organes de suspension aval 50 sont situés au niveau du compartiment chaud C1. Les bielles de reprise de poussée 56 s'étendent depuis le générateur de gaz 12 jusqu'à un point de fixation sur le pylône 28 qui est situé entre les organes de suspension 48, 50.

Les différentes configurations de suspension évoquées ci-dessus présentent des contraintes :
- les organes de suspension amont et aval 48, 50 sont situés dans des plans P1, P2 perpendiculaires à l'axe longitudinal X de la turbomachine 10, qui sont situés à une distance axiale (appelée entraxe) l'un de l'autre qui est relativement faible, ce qui génère des efforts importants dans les organes 48, 50 ;
- la répartition des efforts entre les organes de suspension amont et aval 48, 50 est aussi problématique car le centre de gravité de la turbomachine 10 n'est pas au milieu entre les deux plans de suspension P1, P2 ; et
- la poussée de la turbomachine 10, qui est notamment générée par l'hélice 20, transite par des carters pour être transmise au pylône 28 par les bielles 56.

L'invention propose une solution permettant de résoudre tout ou partie de ces problèmes.

### Résumé de l'invention

L'invention concerne une turbomachine à triple flux pour un aéronef, cette turbomachine ayant un axe longitudinal et comprenant :
- un générateur de gaz comportant au moins un compresseur, une chambre annulaire de combustion, et au moins une turbine,
- au moins une hélice principale entraînée en rotation par un arbre du générateur de gaz,

le générateur de gaz comportant :
   - un premier bec annulaire de séparation de deux veines annulaires d'écoulement respectif d'un flux primaire interne à l'intérieur du générateur de gaz et d'un flux secondaire externe autour du générateur de gaz,
   - un deuxième bec annulaire de séparation de deux veines annulaires d'écoulement respectif d'un premier flux interne et d'un deuxième flux externe,
   - une première tuyère d'éjection du premier flux interne,
   - une deuxième tuyère d'éjection du deuxième flux externe,
   - un premier compartiment annulaire, appelé compartiment chaud, s'étendant axialement entre le deuxième bec et la première tuyère, et entre des première et deuxième parois annulaires, respectivement interne et externe, qui s'étendent, de préférence coaxialement, l'une autour de l'autre, la première paroi définissant extérieurement ladite veine d'écoulement du premier flux interne, et ladite deuxième paroi définissant intérieurement ladite veine d'écoulement du deuxième flux externe,
   - un deuxième compartiment annulaire, appelé compartiment froid, s'étendant axialement entre le premier bec et la deuxième tuyère, et entre des troisième et quatrième parois annulaires, respectivement interne et externe, qui s'étendent, de préférence coaxialement, l'une autour de l'autre, la troisième paroi définissant extérieurement ladite veine d'écoulement du deuxième flux externe, et ladite quatrième paroi définissant intérieurement ladite veine d'écoulement du flux secondaire,
   - des organes de suspension amont de la turbomachine, qui sont situés dans un premier plan perpendiculaire audit axe et qui sont reliés ou fixés au générateur de gaz,
   - des organes de suspension aval de la turbomachine, qui sont situés dans un deuxième plan perpendiculaire audit axe et qui sont reliés ou fixés au générateur de gaz, et
   - des bielles de reprise de poussée qui comprennent des premières extrémités reliées ou fixées au générateur de gaz et des deuxièmes extrémités opposées situées dans un troisième plan perpendiculaire audit axe,
caractérisée en ce que lesdits premier, deuxième et troisième plans sont situés axialement entre le premier bec et la deuxième tuyère, et en ce qu'au moins une partie desdits organes de suspension amont et aval sont reliés ou fixés à ladite troisième paroi.

Dans la présente demande, les expressions « amont » et « aval » font référence à la direction d'écoulement des gaz dans la turbomachine.

L'invention propose ainsi de rapprocher axialement les plans de suspension de la turbomachine l'un de l'autre et de les positionner au niveau de la troisième paroi et donc du compartiment froid du générateur de gaz. Les organes de suspension sont reliés ou fixés à la troisième paroi qui est donc configurée pour transmettre les efforts liés au poids et à la poussée de la turbomachine, jusqu'au pylône. Cette troisième paroi est donc au moins en partie structurale, ce qui signifie qu'elle a une rigidité et une résistance mécanique qui lui permettent d'assurer la transmission des efforts précités.

Avantageusement, la turbomachine est dépourvue d'organes de suspension additionnels en aval desdits organes de suspension aval ou des bielles de reprise de poussée de façon à ce que la turbomachine soit fixée en porte-à-faux au pylône.

La turbomachine selon l'invention peut comprendre une ou plusieurs des caractéristiques suivantes, prises isolément les unes des autres, ou en combinaison les unes avec les autres :
- les organes de suspension aval sont fixés ou reliés à ladite troisième paroi ;
- les organes de suspension aval sont situés dans le compartiment froid ;
- les organes de suspension amont sont fixés à la troisième paroi et/ou à la quatrième paroi ;
- les organes de suspension amont sont situés juste en aval dudit premier bec ;
- lesdites bielles de reprise de poussée s'étendent depuis les organes de suspension amont ou en aval de ces organes jusqu'à des points de liaison sur le générateur de gaz, ces points de liaison étant situés à l'intérieur de la troisième paroi ;
- lesdits points de liaison sont situés en amont dudit deuxième bec ; en variante, ils pourraient être situés en aval dudit deuxième bec ;
- au moins une partie desdites deuxième et troisième parois sont reliées ensemble par des renforts ou bras tubulaires, pour former un ensemble ;
- les deuxième et troisième parois comprennent des ouvertures et des trappes amovibles pour la fermeture de ces ouvertures ;
- ledit ensemble forme un tronçon monobloc ;
- ledit ensemble comprend un premier tronçon monobloc et un deuxième tronçon qui peut être détaché du premier tronçon et qui peut être lui-même monobloc ou formé de deux demi-coquilles articulées l'une par rapport à l'autre autour d'un axe sensiblement parallèle audit axe longitudinal ;
- au moins un échangeur thermique est situé dans ladite deuxième veine externe, et/ou au moins un équipement, tel qu'une boîte d'accessoires ou d'engrenages, est situé dans ledit compartiment froid ;
- ladite au moins une hélice principale est située en amont du générateur de gaz ;
- ladite au moins une hélice principale est située en aval du générateur de gaz ;
- la turbomachine comprend une hélice secondaire entraînée en rotation par un arbre du générateur de gaz, cette hélice étant située dans la veine d'écoulement du flux primaire et en amont dudit deuxième bec annulaire ;
- le pylône comprend une extrémité amont située entre deux aubes de stator adjacentes s'étendant dans la veine d'écoulement du flux secondaire, ou située au niveau d'un pied de l'une de ces aubes ;
- les organes de suspension amont sont situés entre deux aubes de stator adjacentes s'étendant dans la veine d'écoulement du flux secondaire, ou situés au niveau d'un pied de l'une de ces aubes ;
- les organes de suspension amont sont situés en aval du premier bec, et en amont ou au droit du deuxième bec ;
- ledit ensemble est fixé à l'aval d'un carter situé entre deux compresseurs du générateur de gaz.

La présente invention concerne également un ensemble comportant une turbomachine telle que décrite ci-dessus, et un pylône d'accrochage de cette turbomachine à un aéronef, le pylône ayant une forme générale allongée et étant relié ou fixé respectivement aux organes de suspension amont et aval de la turbomachine.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine à double flux pour un aéronef,
[Fig.2] la figure 2 est une vue schématique en coupe axiale de la turbomachine de la figure 1 et de son pylône de suspension à un aéronef, et illustre une configuration des organes de suspension,
[Fig.3] la figure 3 est une vue schématique en coupe axiale de la turbomachine de la figure 1 et de son pylône de suspension à un aéronef, et illustre une autre configuration des organes de suspension,
[Fig.4] la figure 4 est une demi vue schématique en coupe axiale d'une turbomachine à triple flux pour un aéronef,
[Fig.5] la figure 5 est une vue schématique en coupe axiale de la turbomachine de la figure 4 et de son pylône de suspension à un aéronef, et illustre une configuration des organes de suspension,
[Fig.6] la figure 6 est une vue schématique en coupe axiale d'une turbomachine à hélices propulsives aval et de son pylône de suspension à un aéronef, et illustre une configuration des organes de suspension,
[Fig.7] la figure 7 est une vue similaire à celle de la figure 5 et illustre un mode de réalisation d'une turbomachine selon l'invention et de son pylône de suspension à un aéronef,
[Fig.8] la figure 8 est une vue schématique en perspective d'un ensemble pour la turbomachine de la figure 7,
[Fig.9] la figure 9 est une vue schématique en perspective d'une variante de réalisation de l'ensemble pour la turbomachine de la figure 7,
[Fig.10] la figure 10 est une vue schématique d'une variante de réalisation de l'ensemble de la figure 9, vue de face depuis l'aval,
[Fig.11] la figure 11 est une vue similaire à celle de la figure 7 et illustre une variante de réalisation d'une turbomachine selon l'invention et de son pylône de suspension à un aéronef,
[Fig.12] la figure 12 est une vue similaire à celle de la figure 7 et illustre une autre variante de réalisation d'une turbomachine selon l'invention et de son pylône de suspension à un aéronef,
[Fig.13] la figure 13 est une vue similaire à celle de la figure 7 et illustre une autre variante de réalisation d'une turbomachine selon l'invention et de son pylône de suspension à un aéronef.
[Fig.14] la figure 14 est une vue similaire à celle de la figure 7 et illustre une autre variante de réalisation d'une turbomachine selon l'invention et de son pylône de suspension à un aéronef,
[Fig.15] la figure 15 est une vue similaire à celle de la figure 7 et illustre une autre variante de réalisation d'une turbomachine selon l'invention et de son pylône de suspension à un aéronef, et
[Fig.16] la figure 16 est une vue similaire à celle de la figure 7 et illustre une autre variante de réalisation d'une turbomachine selon l'invention et de son pylône de suspension à un aéronef.

### Description détaillée de l'invention

Les figures 1 à 6 ont été décrites dans ce qui précède.

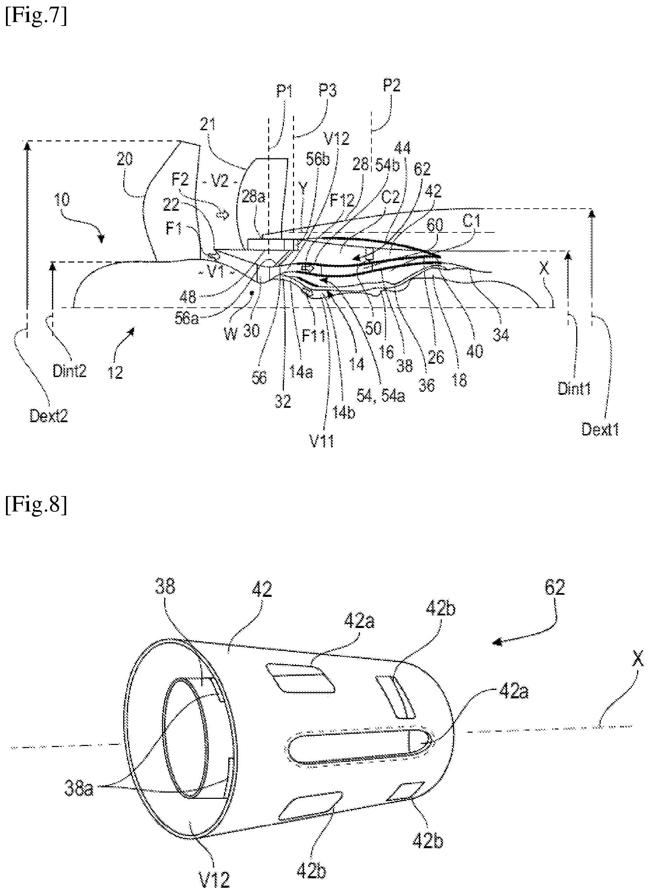

La figure 7 représente une turbomachine 10 d'aéronef selon un mode de réalisation de l'invention, ainsi qu'un pylône 28 de suspension de la turbomachine 10 à une partie d'un aéronef, telle qu'une voilure par exemple. Le pylône 28 a une forme générale allongée le long d'un axe Y qui est parallèle à l'axe longitudinal X de la turbomachine 10. Le pylône 28 comprend un diamètre externe noté Dext1 et un diamètre interne noté Dint1. La turbomachine 10 est similaire à celle de la figure 4. Elle comprend un générateur de gaz 12 comportant au moins un compresseur 14, une chambre annulaire de combustion 16 et au moins une turbine 18.

Le générateur de gaz 12 comprend de préférence deux compresseurs 14a, 14b successifs. Le compresseur 14a situé en amont est un compresseur basse pression. Le compresseur 14b situé en aval est un compresseur haute pression. Les deux compresseurs 14a, 14b sont séparés l'un de l'autre par un carter 54 intermédiaire ou inter-compresseur qui comprend un moyeu interne 54a et une virole 54b s'étendant autour du moyeu 54a et reliée au moyeu par des bras non représentés.

La turbomachine 10 comprend en outre une hélice de propulsion 20 qui est située à l'amont du générateur de gaz 12 et qui est entraînée par un arbre de la turbine 18. L'hélice 20 a un diamètre externe noté Dext2 et un diamètre interne noté Dint2.

Le générateur de gaz 12 comporte un bec annulaire 22 de séparation de deux veines annulaires V1, V2 d'écoulement respectif d'un flux primaire interne F1 à l'intérieur du générateur de gaz 12, et d'un flux secondaire externe F2 autour du générateur de gaz 12.

La turbomachine 10 comprend une hélice secondaire 30 entraînée en rotation par un arbre du générateur de gaz 10. Cette hélice 30 est située dans la veine V1 d'écoulement du flux primaire F1 et en amont d'un deuxième bec annulaire 32 de séparation de deux veines annulaires V11, V12 d'écoulement respectif d'un premier flux interne F11 et d'un deuxième flux externe F12.

Des échangeurs 26 sont logés dans la veine V12 et sont alimentés par le deuxième flux externe F12. Le premier flux interne F11 alimente le compresseur 14, comme évoqué dans ce qui précède.

Le générateur de gaz 12 comprend deux compartiments annulaires C1, C2 qui s'étendent autour de l'axe X.

Le premier compartiment annulaire C1, ou compartiment chaud, s'étend axialement entre le deuxième bec 32 et une première tuyère 34 d'éjection du premier flux interne F11 en sortie de la ou des turbine(s). Ce compartiment chaud C1 est en outre délimité radialement par des première et deuxième parois annulaires 36, 38, respectivement interne et externe, qui s'étendent coaxialement l'une autour de l'autre. La première paroi 36 définit extérieurement la veine d'écoulement V11 du premier flux interne F11, et la deuxième paroi 38 définit intérieurement la veine V12 d'écoulement du deuxième flux externe F12.

Le deuxième compartiment annulaire C2, appelé compartiment froid, s'étend axialement entre le premier bec 22 et une deuxième tuyère 40 d'éjection du deuxième flux externe F12. Ce compartiment froid C2 est en outre délimité radialement par des troisième et quatrième parois annulaires 42, 44, respectivement interne et externe, qui s'étendent coaxialement l'une autour de l'autre. La troisième paroi 42 définit extérieurement la veine V12 d'écoulement du deuxième flux externe F12, et la quatrième paroi 44 définit intérieurement la veine V2 d'écoulement du flux secondaire F2.

La turbomachine 10 comprend, en aval de l'hélice 20 et du bec 22, des aubes de stator 21 qui s'étendent radialement vers l'extérieur depuis la paroi 44 et à travers la veine V2.

Le pylône 28 comprend une extrémité libre 28a à l'amont. Cette extrémité libre 28a est située ici entre deux aubes de stator 21 adjacentes ou au niveau du pied de l'une de ces aubes 21. L'extrémité libre 28a du pylône 28 est située entre les bord d'attaque et de fuite des aubes de stator 21.

Le compartiment froid C2 est conçu pour loger des équipements de la turbomachine 10, comme cela sera décrit plus en détail dans ce qui suit.

La turbomachine 10 est suspendue au pylône 28 par l'intermédiaire d'organes de suspension amont 48 et d'organes de suspension aval 50.

Les organes de suspension amont 48 sont situés dans un premier plan P1 perpendiculaire à l'axe X et qui sont reliés ou fixés au générateur de gaz 12. Les organes de suspension aval 50 sont situés dans un deuxième plan P2 perpendiculaire à l'axe et sont reliés ou fixés au générateur de gaz 12.

Selon l'invention, ces plans P1, P2 sont situés axialement entre le premier bec 22 et la deuxième tuyère 40, c'est-à-dire au niveau du compartiment froid C2. Par ailleurs, au moins une partie de ces organes de suspension 48, 50 sont reliés ou fixés à la paroi 42.

Dans l'exemple représenté, Dext1 est inférieur à Dext 2, et Dint1 est inférieur au diamètre maximal de la paroi 44 de façon à ce qu'une partie inférieure du pylône 28 soit logée dans le compartiment froid C2, comme représenté dans la figure.

Le ou les organes 48 sont situés à l'extrémité amont 28a du pylône 28 et ils peuvent être situés juste en aval du bec 22. Ils peuvent être fixés ou reliés à la paroi 42 et/ou à la paroi 44.

Les organes 48 peuvent être situés sensiblement au droit du bec 32. Autrement dit, le plan P1 peut passer sensiblement au niveau du bec 32 ou juste en amont de ce dernier, comme illustré dans le dessin.

Des bielles de reprise de poussée 56 s'étendent depuis les organes 48 jusqu'au générateur de gaz 12. Les bielles 56 s'étendent de l'amont vers l'aval radialement vers l'extérieur et comprennent des premières extrémités radialement internes 56a reliées, par exemple par des chapes, à la paroi 42 ou à des points W du générateur de gaz 12 situés radialement à l'intérieur de cette paroi 42. Ces points W peuvent être situés en amont du bec 32. Ceci n'est toutefois pas toujours le cas, comme illustré par les variantes 14 à 16 décrites plus bas.

Les bielles 56 comprennent des secondes extrémités radialement externes 56b qui sont situées dans un troisième plan P3 perpendiculaire à l'axe X. Le plan P3 est situé entre les plans P1 et P2. Ces secondes extrémités 56b sont par exemple reliées par un palonnier au pylône 28, juste en aval des organes 48.

Les organes 50 sont situés en aval des organes 48 et sont fixés ou reliés à la paroi 42. Ils sont situés à l'intérieur du compartiment froid C2.

La paroi 42 est reliée à la paroi 38 par des bras tubulaires 60 qui s'étendent radialement dans la veine V12 et sont utilisés pour le passage de servitudes à travers cette veine. Les servitudes sont par exemple des harnais et câbles électriques, des canalisations d'huile, des conduites de ventilation, etc. Les parois 38, 42 et les bras 60 forment un tout appelé ensemble 62.

En variante, les bras 60 pourraient être remplacés par des renforts (non tubulaires).

L'ensemble 62 est destiné à être fixé à l'extrémité aval du carter 54. La paroi 42 a son extrémité amont qui est fixée à l'extrémité aval de la virole 56b, et la paroi 38 a son extrémité amont qui est fixée au moyeu 56a.

Les figures 8 à 10 illustrent des exemples de réalisation de cet ensemble 62. Dans le cas de la figure 8, l'ensemble 62 est monobloc. La paroi 42 comprend des orifices 42a qui débouchent dans les cavités internes des bras 60 pour le passage des servitudes précitées. La paroi 42 comprend en outre des ouvertures 42b qui sont configurées pour permettre de réaliser des opérations de maintenance et d'inspection. Ces ouvertures 42b sont destinées à être fermées de manière étanche par des trappes amovibles qui ne sont pas représentées. Ces trappes peuvent être démontées et retirées à travers des ouvertures similaires prévues sur la paroi 44 par exemple.

De la même façon, la paroi 38 peut comprendre des ouvertures 38a similaires pour autoriser des opérations de maintenance et d'inspection jusqu'à l'intérieur de l'ensemble 62. Les ouvertures 42b, 38a des parois 38, 42 sont de préférence alignées radialement les unes avec les autres.

L'ensemble 62 de la figure 8 est structural et configuré pour transmettre les efforts de la turbomachine 10 au pylône 28 en fonctionnement.

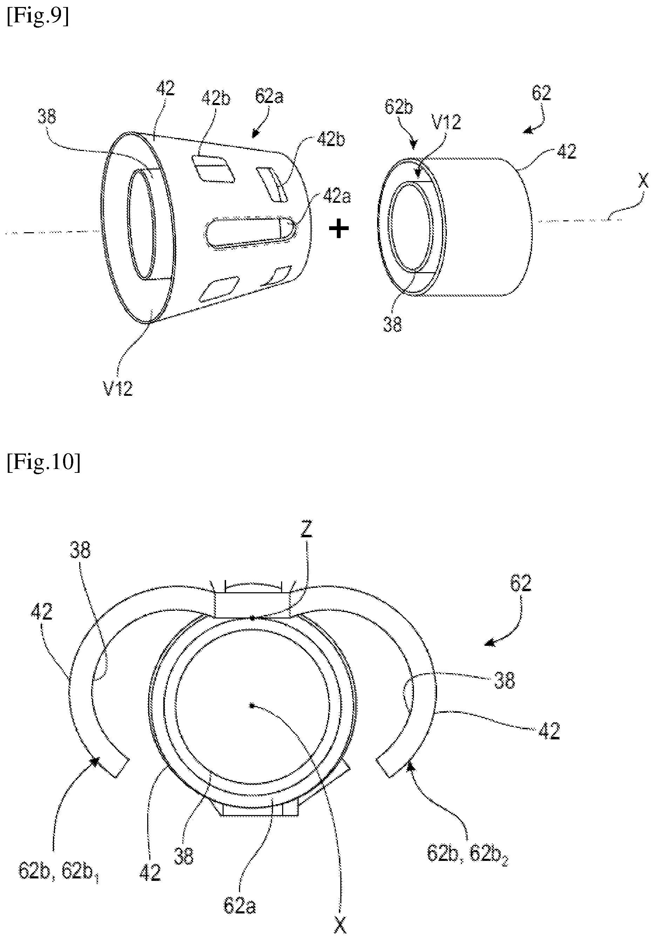

Dans le cas de la figure 9, l'ensemble 62 comprend deux tronçons, respectivement amont 62a et aval 62b. Le tronçon amont 62a est similaire à l'ensemble 62 de la figure 8. Le tronçon aval 62b est destiné à être fixé de manière détachable à l'extrémité aval du tronçon amont 62a. Plus spécifiquement, le tronçon aval 62b comprend une portion de la paroi 42 qui est destinée à être fixée de manière détachable à la portion de la paroi 42 du tronçon 62a, et une portion de la paroi 38 qui est destinée à être fixée de manière détachable à la portion de la paroi 38 du tronçon 62a.

Les tronçons amont 62a et aval 62b sont chacun du type *O*-*Duct,* c'est-à-dire qu'ils forment chacun une conduite annulaire sans interruption, comme cela est décrit dans le document FR-A1-2 981 989.

La figure 10 illustre une variante de réalisation de l'ensemble 62 dans laquelle le tronçon amont 62a du type *O*-*Duct* est associé à un tronçon aval 62b du type *D-Duct.* Le tronçon 62b est formé de deux demi-coquilles 62b1, 62b2 articulées l'une par rapport à l'autre autour d'un axe Z sensiblement parallèle à l'axe X. L'ouverture du tronçon 62b, par pivotement des demi-coquilles 62b1, 62b2 autour de l'axe X, permet d'avoir accès à l'intérieur du tronçon 62b lors d'une opération de maintenance ou d'inspection.

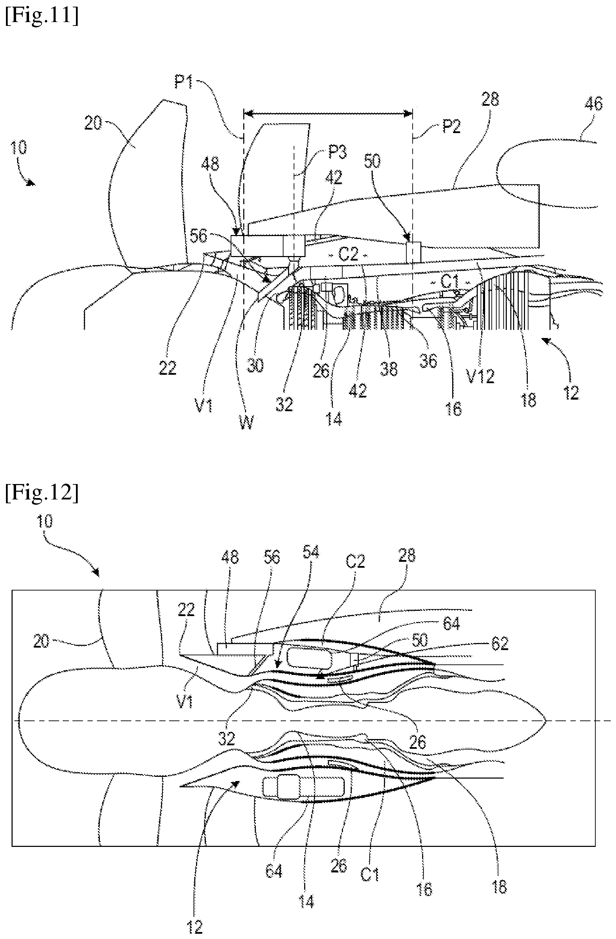

La figure 11 montre des échangeurs 26 logés dans la veine V12.

La figure 12 montre des équipements 64 logés dans le compartiment froid C2. L'entraxe entre les plans P1, P2 et le positionnement des bielles 56 au niveau des organes 48 permet de libérer de l'espace dans le compartiment C2 pour l'installation les équipements 64. En particulier, ces équipements 64 peuvent comprendre des équipements électroniques, une boîte d'accessoires ou d'engrenages, etc.

Dans encore une autre variante non représentée, la turbomachine 10 selon l'invention pourrait être du type de celle représentée à la figure 6 et comporter au moins une hélice principale 20, ou un doublet d'hélice, en aval du générateur de gaz 12.

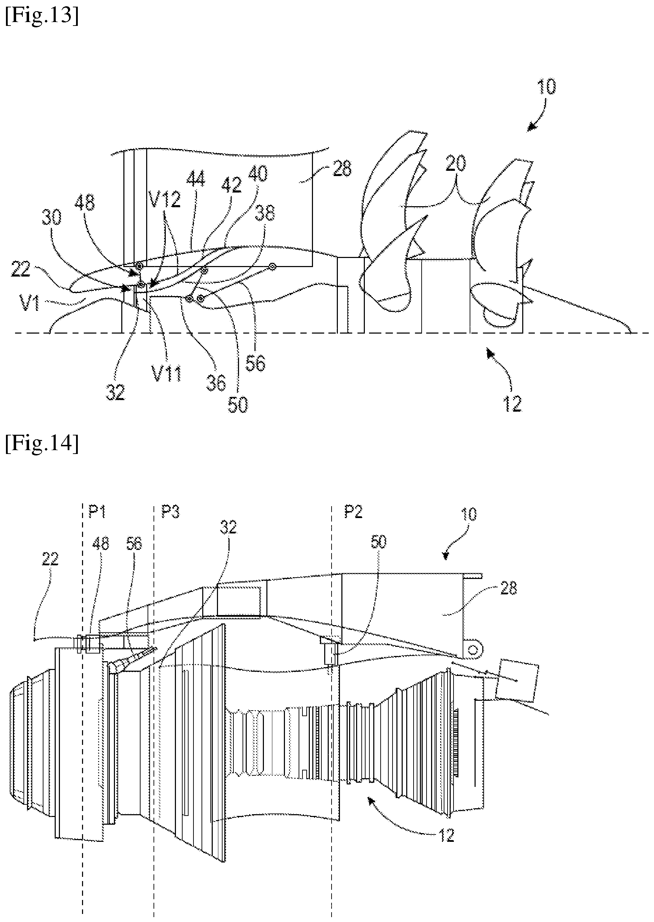

C'est notamment le cas de la variante de réalisation de la figure 13 dans laquelle les organes de suspension amont 48 sont situés au niveau du compartiment froid C2, les bielles de reprise de poussée 56 s'étendent depuis le générateur de gaz 12 jusqu'à un point de fixation sur le pylône 28, et les organes de suspension aval 50 sont situés entre les organes de suspension 48 et les bielles de reprise de poussée 56.

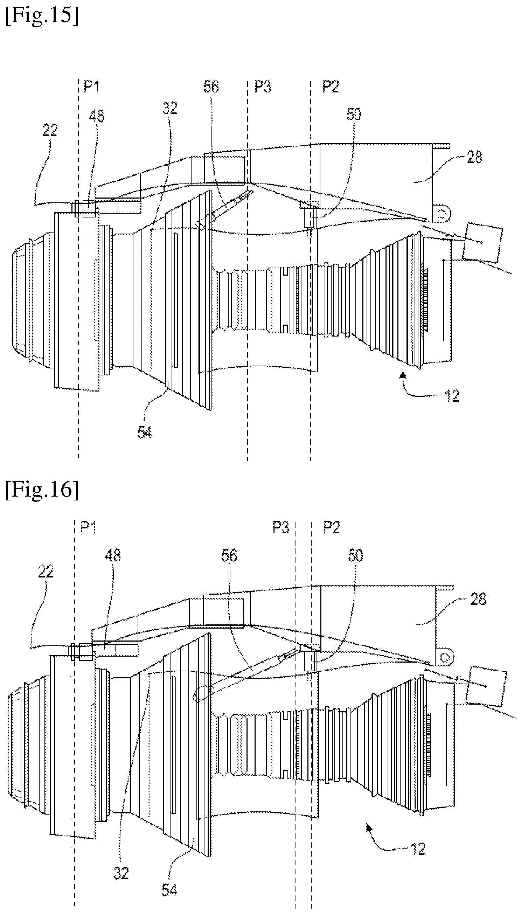

Les variantes illustrées aux figures 14 à 16 montrent que les bielles de reprise de poussée 56 peuvent être situées en amont du bec de séparation 32, entre le générateur de gaz 12 et le pylône 28 (figure 14), en aval du bec de séparation 32, entre le carter interne 54 et le pylône 28 (figure 15 - le plan P3 est ici reculé), ou en aval du bec de séparation 32, entre le carter interne 54 et le pylône 28 (figure 16 - le plan P3 est ici reculé et presque confondu avec le plan P2).

La turbomachine 10 selon l'invention présente de nombreux avantages parmi lesquels :
- Le compartiment froid C2 est relativement volumineux, ce qui est avantageux pour loger des équipements 64.
- Un autre avantage est d'avoir un compartiment froid C2 protégé du feu et des rayonnements thermiques par la veine d'écoulement V12 du flux F12, ce qui permet d'augmenter la durée de vie des équipements 64 installés dans ce compartiment C2 tout en optimisant leur conception sans contraintes très élevées de tenue en température.

- De plus, du point de vue aérodynamique, le diamètre de la veine V12 étant relativement petit par rapport à la technique antérieure, la dimension radiale de la veine est plus grande pour une même section de passage par rapport à la technique actuelle, ce qui facilite l'intégration des échangeurs thermiques.
- Par ailleurs, la maîtrise du mach dans la veine V12 y est plus aisée (le mach dans la veine étant directement lié à la section de passage). En effet, avec une veine à plus grand diamètre, un très faible écart sur la dimension radiale de veine a un fort impact sur la section de passage.

## Revendications

1. Turbomachine à triple flux (10) pour un aéronef, cette turbomachine ayant un axe longitudinal (X) et comprenant :
- un générateur de gaz (12) comportant au moins un compresseur (14), une chambre annulaire de combustion (16), et au moins une turbine (18),
- au moins une hélice principale (20) entraînée en rotation par un arbre du générateur de gaz (12),
le générateur de gaz (12) comportant :
- un premier bec annulaire (22) de séparation de deux veines annulaires (V1, V2) d'écoulement respectif d'un flux primaire (F1) interne à l'intérieur du générateur de gaz (12) et d'un flux secondaire (F2) externe autour du générateur de gaz (12),
- un deuxième bec annulaire (32) de séparation de deux veines annulaires (V11, V12) d'écoulement respectif d'un premier flux interne (F11) et d'un deuxième flux externe (F12),
- une première tuyère (34) d'éjection du premier flux interne (F11),
- une deuxième tuyère (40) d'éjection du deuxième flux externe (F12),
- un premier compartiment annulaire (C1), appelé compartiment chaud, s'étendant axialement entre le deuxième bec (32) et la première tuyère (34), et entre des première et deuxième parois annulaires (36, 38), respectivement interne et externe, qui s'étendent l'une autour de l'autre, la première paroi (36) définissant extérieurement ladite veine (V11) d'écoulement du premier flux interne (F11), et ladite deuxième paroi (38) définissant intérieurement ladite veine (V12) d'écoulement du deuxième flux externe (F12),
- un deuxième compartiment annulaire (C2), appelé compartiment froid, s'étendant axialement entre le premier bec (22) et la deuxième tuyère (40), et entre des troisième et quatrième parois annulaires (42, 44), respectivement interne et externe, qui s'étendent l'une autour de l'autre, la troisième paroi (42) définissant extérieurement ladite veine (V12) d'écoulement du deuxième flux externe (F12), et ladite quatrième paroi (44) définissant intérieurement ladite veine (V2) d'écoulement du flux secondaire (F2),
- des organes de suspension amont (48) de la turbomachine (10), qui sont situés dans un premier plan (P1) perpendiculaire audit axe (X) et qui sont reliés ou fixés au générateur de gaz (12),
- des organes de suspension aval (50) de la turbomachine (10), qui sont situés dans un deuxième plan (P2) perpendiculaire audit axe et qui sont reliés ou fixés au générateur de gaz (12), et
- des bielles de reprise de poussée (56) qui comprennent des premières extrémités (56a) reliées ou fixées au générateur de gaz (12) et des deuxièmes extrémités (56b) opposées situées dans un troisième plan (P3) perpendiculaire audit axe (X),
**caractérisée en ce que** lesdits premier, deuxième et troisième plans (P1, P2, P3) sont situés axialement entre le premier bec (22) et la deuxième tuyère (40), et **en ce qu'**au moins une partie desdits organes de suspension amont et aval (48, 50) sont reliés ou fixés à ladite troisième paroi (42).

2. Turbomachine (10) selon la revendication 1, dans laquelle les organes de suspension aval (50) sont fixés ou reliés à ladite troisième paroi (42).

3. Turbomachine (10) selon la revendication 1 ou 2, dans laquelle les organes de suspension aval (50) sont situés dans le compartiment froid (C2).

4. Turbomachine (10) selon l'une des revendications précédentes, dans laquelle les organes de suspension amont (48) sont fixés à la troisième paroi (42) et/ou à la quatrième paroi (44).

5. Turbomachine (10) selon la revendication 4, dans laquelle les organes de suspension amont (48) sont situés juste en aval dudit premier bec (22).

6. Turbomachine (10) selon l'une des revendications précédentes, dans laquelle lesdites bielles de reprise de poussée (56) s'étendent depuis les organes de suspension amont (48) ou en aval de ces organes jusqu'à des points (W) de liaison sur le générateur de gaz (12), ces points de liaison (W) étant situés à l'intérieur de la troisième paroi (42).

7. Turbomachine (10) selon l'une des revendications précédentes, dans laquelle au moins une partie desdites deuxième et troisième parois (38, 42) sont reliées ensemble par des renforts ou bras tubulaires, pour former un ensemble (62).

8. Turbomachine (10) selon la revendication 7, dans laquelle les deuxième et troisième parois (38, 42) comprennent des ouvertures (38a, 42b) et des trappes amovibles pour la fermeture de ces ouvertures.

9. Turbomachine (10) selon la revendication 7 ou 8, dans laquelle ledit ensemble (62) forme un tronçon monobloc.

10. Turbomachine (10) selon la revendication 7 ou 8, dans laquelle ledit ensemble (62) comprend un premier tronçon (62a) monobloc et un deuxième tronçon (62b) qui peut être détaché du premier tronçon et qui peut être lui-même monobloc ou formé de deux demi-coquilles (62b1, 62b2) articulées l'une par rapport à l'autre autour d'un axe (Z) sensiblement parallèle audit axe longitudinal (X).

11. Turbomachine (10) selon l'une des revendications précédentes, dans laquelle au moins un échangeur thermique (26) est situé dans ladite deuxième veine externe (V12), et/ou au moins un équipement (64), tel qu'une boîte d'accessoires ou d'engrenages, est situé dans ledit compartiment froid (C2).

12. Turbomachine (10) selon l'une des revendications précédentes, dans laquelle ladite au moins une hélice principale (20) est située en amont du générateur de gaz (12).

13. Turbomachine (10) selon l'une des revendications 1 à 11, dans laquelle ladite au moins une hélice principale (20) est située en aval du générateur de gaz (12).

14. Turbomachine (10) selon l'une des revendications précédentes, dans laquelle elle comprend une hélice secondaire (30) entraînée en rotation par un arbre du générateur de gaz (12), cette hélice (30) étant située dans la veine (V1) d'écoulement du flux primaire (F1) et en amont dudit deuxième bec annulaire (32).

15. Ensemble comportant une turbomachine (10) selon l'une des revendications précédentes, et un pylône (28) d'accrochage de cette turbomachine à un aéronef, le pylône (28) ayant une forme générale allongée et étant relié ou fixé respectivement aux organes de suspension amont et aval (48, 50) de la turbomachine (10).

## Patentansprüche

1. Dreistrom-Turbotriebwerk (10) für ein Luftfahrzeug, wobei dieses Turbotriebwerk eine Längsachse (X) aufweist und umfasst:
- einen Gasgenerator (12), der mindestens einen Kompressor (14), eine ringförmige Verbrennungskammer (16), und mindestens eine Turbine (18) aufweist,
- mindestens einen Hauptpropeller (20), der von einer Welle des Gasgenerators (12) in Drehung angetrieben wird,
wobei der Gasgenerator (12) aufweist:
- eine erste Ringstrahldüse (22) zum Trennen zweier Ringkanäle (V1, V2) zum jeweiligen Strömen eines internen Primärstroms (F1) im Inneren des Gasgenerators (12) und eines externen Sekundärstroms (F2) um den Gasgenerator (12) herum,
- eine zweite Ringstrahldüse (32) zum Trennen zweier Ringkanäle (V11, V12) zum jeweiligen Strömen eines ersten internen Stroms (F11) und eines zweiten externen Stroms (F12),
- eine erste Düse (34) zum Ausstoß des ersten internen Stroms (F11),
- eine zweite Düse (40) zum Ausstoß des zweiten externen Stroms (F12),
- ein erstes Ringfach (C1), Heißfach genannt, das sich axial zwischen der zweiten Strahldüse (32) und der ersten Düse (34), und zwischen ersten und zweiten, jeweils internen und externen Ringwänden (36, 38) erstreckt, die sich um einander herum erstrecken, wobei die erste Wand (36) außen den Kanal (V11) zum Strömen des ersten internen Stroms (F11) definiert, und die zweite Wand (38) innen den Kanal (V12) zum Strömen des zweiten externen Stroms (F12) definiert,
- ein zweites Ringfach (C2), Kaltfach genannt, das sich axial zwischen der ersten Strahldüse (22) und der zweiten Düse (40), und zwischen dritten und vierten, jeweils internen und externen Ringwänden (42, 44) erstreckt, die sich um einander herum erstrecken, wobei die dritte Wand (42) außen den Kanal (V12) zum Strömen des zweiten externen Stroms (F12) definiert, und die vierte Wand (44) innen den Kanal (V2) zum Strömen des Sekundärstroms (F2) definiert,
- Aufhängungsorgane stromaufwärts (48) des Turbotriebwerks (10), die sich auf einer ersten Ebene (P1) senkrecht zur Achse (X) befinden und die an den Gasgenerator (12) angeschlossen, oder daran befestigt sind,
- Aufhängungsorgane stromabwärts (50) des Turbotriebwerks (10), die sich auf einer zweiten Ebene (P2) senkrecht zur Achse befinden und die an den Gasgenerator (12) angeschlossen, oder daran befestigt sind, und
- Schubaufnahmestangen (56), die erste Enden (56a) umfassen, die an den Gasgenerator (12) angeschlossen oder daran befestigt sind, und gegenüberliegende zweite Enden (56b), die sich auf einer dritten Ebene (P3) senkrecht zur Achse (X) befinden,
**dadurch gekennzeichnet, dass** sich die erste, zweite und dritte Ebene (P1, P2, P3) axial zwischen der ersten Strahldüse (22) und der zweiten Düse (40) befinden, und dadurch, dass mindestens ein Teil der stromaufwärts und stromabwärts gelegenen Aufhängungsorgane (48, 50) an die dritte Wand (42) angeschlossen oder daran befestigt sind.

2. Turbotriebwerk (10) nach Anspruch 1, wobei die stromabwärts gelegenen Aufhängungsorgane (50) an der dritten Wand (42) befestigt oder daran angeschlossen sind.

3. Turbotriebwerk (10) nach Anspruch 1 oder 2, wobei sich die stromabwärts gelegenen Aufhängungsorgane (50) im Kaltfach (C2) befinden.

4. Turbotriebwerk (10) nach einem der vorstehenden Ansprüche, wobei die stromaufwärts gelegenen Aufhängungsorgane (48) an der dritten Wand (42) und/oder an der vierten Wand (44) befestigt sind.

5. Turbotriebwerk (10) nach Anspruch 4, wobei sich die stromaufwärts gelegenen Aufhängungorgane (48) unmittelbar stromabwärts der ersten Strahldüse (22) befinden.

6. Turbotriebwerk (10) nach einem der vorstehenden Ansprüche, wobei sich die Schubaufnahmestangen (56) von den stromaufwärts gelegenen Aufhängungsorganen (48) oder stromabwärts dieser Organe bis zu Anschlusspunkten (W) auf dem Gasgenerator (12) erstrecken, wobei sich diese Anschlusspunkte (W) im Inneren der dritten Wand (42) befinden.

7. Turbotriebwerk (10) nach einem der vorstehenden Ansprüche, wobei mindestens ein Teil der zweiten und dritten Wand (38, 42) durch Verstrebungen oder rohrförmige Arme aneinander angeschlossen sind, um eine Anordnung (62) zu bilden.

8. Turbotriebwerk (10) nach Anspruch 7, wobei die zweite und dritte Wand (38, 42) Öffnungen (38a, 42b) und abnehmbare Klappen zum Schließen dieser Öffnungen umfassen.

9. Turbotriebwerk (10) nach Anspruch 7 oder 8, wobei die Anordnung (62) einen einteiligen Teilabschnitt bildet.

10. Turbotriebwerk (10) nach Anspruch 7 oder 8, wobei die Anordnung (62) einen ersten einteiligen Teilabschnitt (62a) und einen zweiten Teilabschnitt (62b) umfasst, der vom ersten Teilabschnitt gelöst werden kann, und der selbst einteilig, oder aus zwei um eine im Wesentlichen zur Längsachse (X) parallelen Achse (Z) zueinander gelenkigen Halbschalen (62b1, 62b2) gebildet sein kann.

11. Turbotriebwerk (10) nach einem der vorstehenden Ansprüche, wobei sich mindestens ein Wärmetauscher (26) im zweiten externen Kanal (V12) befindet, und/oder sich mindestens eine Ausrüstung (64), wie ein Zubehör- oder Räderkasten in dem Kaltfach (C2) befindet.

12. Turbotriebwerk (10) nach einem der vorstehenden Ansprüche, wobei sich der mindestens eine Hauptpropeller (20) stromaufwärts des Gasgenerators (12) befindet.

13. Turbotriebwerk (10) nach einem der Ansprüche 1 bis 11, wobei sich der mindestens eine Hauptpropeller (20) stromabwärts des Gasgenerators (12) befindet.

14. Turbotriebwerk (10) nach einem der vorstehenden Ansprüche, wobei es einen Sekundärpropeller (30) umfasst, der durch eine Welle des Gasgenerators (12) in Drehung angetrieben wird, wobei sich dieser Propeller (30) im Kanal (V1) zum Strömen des Primärstroms (F1) und stromabwärts der zweiten Ringstrahldüse (32) befindet.

15. Anordnung, die ein Turbotriebwerk (10) nach einem der vorstehenden Ansprüche, und einen Trägermast (28) zum Ankoppeln dieses Turbotriebwerks an ein Luftfahrzeug umfasst, wobei der Trägermast (28) eine im Allgemeinen längliche Form aufweist, und jeweils an die stromaufwärts und stromabwärts gelegenen Aufhängungsorgane (48, 50) des Turbotriebwerks (10) angeschlossen oder daran befestigt ist.

## Claims

1. A triple-flow turbine engine (10) for an aircraft, this turbine engine having a longitudinal axis (X) and comprising:
- a gas generator (12) comprising at least one compressor (14), an annular combustion chamber (16), and at least one turbine (18),
- at least one main propeller (20) rotated by a shaft of the gas generator (12),
the gas generator (12) comprising:
- a first annular splitter nose (22) for separating two annular ducts (V1, V2) for the respective flow of an internal primary flow (F1) inside the gas generator (12) and an external secondary flow (F2) around the gas generator (12),
- a second annular splitter nose (32) for separating two annular ducts (V11, V12) for the respective flow of a first internal flow (F11) and of a second external flow (F12),
- a first nozzle (34) for ejecting the first internal flow (F11),
- a second nozzle (40) for ejecting the second external flow (F12),
- a first annular compartment (C1), referred to as hot compartment, extending axially between the second splitter nose (32) and the first nozzle (34), and between first and second annular walls (36, 38), respectively internal and external, which extend around each other, the first wall (36) externally defining said duct (V11) for the flow of the first internal flow (F11), and said second wall (38) internally defining said duct (V12) for the flow of the second external flow (F12),
- a second annular compartment (C2), referred to as cold compartment, extending axially between the first splitter nose (22) and the second nozzle (40), and between third and fourth annular walls (42, 44), respectively internal and external, which extend around each other, the third wall (42) externally defining said duct (V12) for the flow of the second external flow (F12), and said fourth wall (44) internally defining said duct (V2) for the flow of the secondary flow (F2),
- upstream suspension members (48) of the turbine engine (10), which are located in a first plane (P1) perpendicular to said axis (X) and which are connected or attached to the gas generator (12),
- downstream suspension members (50) of the turbine engine (10), which are located in a second plane (P2) perpendicular to said axis and which are connected or attached to the gas generator (12), and
- thrust-absorbing rods (56) which comprise first ends (56a) connected or attached to the gas generator (12) and opposite second ends (56b) located in a third plane (P3) perpendicular to said axis (X),
**characterized in that** said first, second and third planes (P1, P2, P3) are located axially between the first splitter nose (22) and the second nozzle (40), and **in that** at least one part of said upstream and downstream suspension members (48, 50) are connected or attached to said third wall (42).

2. The turbine engine (10) according to claim 1, wherein the downstream suspension members (50) are attached or connected to said third wall (42).

3. The turbine engine (10) according to claim 1 or 2, wherein the downstream suspension members (50) are located in the cold compartment (C2).

4. The turbine engine (10) according to any of the preceding claims, wherein the upstream suspension members (48) are attached to the third wall (42) and/or to the fourth wall (44).

5. The turbine engine (10) according to claim 4, wherein the upstream suspension members (48) are located just downstream of said first splitter nose (22).

6. The turbine engine (10) according to any of the preceding claims, wherein said thrust-absorbing rods (56) extend from the upstream suspension members (48) or downstream of these members to connection points (W) on the gas generator (12), these connection points (W) being located inside the third wall (42).

7. The turbine engine (10) according to any of the preceding claims, wherein at least one part of said second and third walls (38, 42) are connected together by tubular reinforcements or arms, to form an assembly (62).

8. The turbine engine (10) according to claim 7, wherein the second and third walls (38, 42) comprise openings (38a, 42b) and removable hatches for closing these openings.

9. The turbine engine (10) according to claim 7 or 8, wherein said assembly (62) forms a segment in one piece.

10. The turbine engine (10) according to claim 7 or 8, wherein said assembly (62) comprises a first segment (62a) in one piece and a second segment (62b) which can be detached from the first segment and which can itself be in one piece or formed of two half-shells (62b1, 62b2) articulated with respect to each other about an axis (Z) substantially parallel to said longitudinal axis (X).

11. The turbine engine (10) according to any of the preceding claims, wherein at least one heat exchanger (26) is located in said second external flow duct (V12), and/or at least one equipment (64), such as an accessory box or gearbox, is located in said cold compartment (C2).

12. The turbine engine (10) according to any of the preceding claims, wherein said at least one main propeller (20) is located upstream of the gas generator (12).

13. The turbine engine (10) according to any of claims 1 to 11, wherein said at least one main propeller (20) is located downstream of the gas generator (12).

14. The turbine engine (10) according to any of the preceding claims, wherein it comprises a secondary propeller (30) driven in rotation by a shaft of the gas generator (12), this propeller (30) being located in the duct (V1) for the flow of the primary flow (F1) and upstream of said second annular splitter nose (32).

15. An assembly comprising a turbine engine (10) according to any of the preceding claims, and a pylon (28) for hanging this turbine engine to an aircraft, the pylon (28) having a generally elongate shape and being connected or attached respectively to the upstream and downstream suspension members (48, 50) of the turbine engine (10).
